# EUROPEAN PATENT APPLICATION

(11) **EP 4 180 398 A1**
(43) Date of publication of application: **17.05.2023**
(21) Application number: 20945597.1
(22) Date of filing: 11.07.2020
(51) Int. Cl.: C01G 53/00, H01M 4/86, H01M 8/12, H01M 8/1246

(54) **PEROVSKITE-TYPE COMPOSITE OXIDE POWDER**

(71) Applicant: DOWA Electronics Materials Co., Ltd., Tokyo 101-0021 (JP)
(72) Inventor: OGAWA, Shintaro, Okayama-shi, Okayama 702-8506 (JP); IKARI, Kazumasa, Okayama-shi, Okayama 702-8506 (JP); UEYAMA, Toshihiko, Tokyo 101-0021 (JP)
(74) Representative: Müller-Boré & Partner Patentanwälte PartG mbB
(86) International application number: PCT/JP2020/027172
(87) International publication number: WO 2022/013903

(57) **Abstract**

A perovskite-type composite oxide powder according to the present invention is a perovskite-type composite oxide powder represented by a general formula ABO_{3-δ} (where δ represents an amount of deficiency of oxygen and 0 ≤ δ < 1), an element contained in an A site is La, elements contained in a B site are Co and Ni and a crystallite size determined by a Williamson-Hall method is equal to or greater than 20 nm and equal to or less than 100 nm. In this way, when the perovskite-type composite oxide powder is used as an air electrode material for a fuel cell, an air electrode in which the resistance thereof is low and the conductivity thereof is high can be obtained.

## Description

### Technical Field

The present invention relates to a composite oxide powder having a perovskite-type structure, and more particularly relates to a composite oxide powder which is suitably used as an air electrode material for a solid oxide fuel cell (SOFC: hereinafter also simply referred to as an "SOFC)".

### Background Art

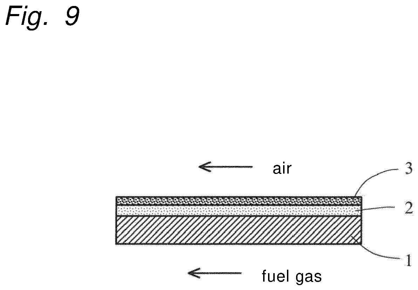

For example, since an SOFC has high power generation efficiency among various types of fuel cells, and a variety of fuels can be used, the SOFC is being developed as a next-generation power generation device with low environmental impact. A single SOFC has a structure in which an air electrode (cathode) of a porous structure, a dense solid electrolyte including an oxide ion conductor and a fuel electrode (anode) of a porous structure are stacked in this order (see FIG. 9). When the SOFC is operated, an O₂ (oxygen)-containing gas such as air is supplied to the air electrode, and a fuel gas such as H₂ (hydrogen) is supplied to the fuel electrode. When in this state, a current is applied to the SOFC, O₂ is reduced into O²⁻anions (oxygen ions) in the air electrode. Then, the O²⁻ anions pass through the solid electrolyte to reach the fuel electrode, and oxidize H₂ to emit electrons. In this way, electrical energy is generated (that is, power is generated).

Although the operating temperature of the SOFC as described above is conventionally about 800 to 1000°C, the operating temperature of the SOFC has been attempted to be lowered in recent years. However, the minimum temperature of SOFCs in practical use is still so high as to be 600°C or more.

Since the cell structure as described above is used and the operating temperature is high, the material of the air electrode in the SOFC is basically required to have, for example, properties in which oxygen ion conductivity is high, electronic conductivity is high, thermal expansion is equivalent or approximate to an electrolyte, chemical stability is high, compatibility with other constituent materials is satisfactory, a sintered body is porous and a constant strength is provided.

Patent Document 1 proposes, as the material of the air electrode of the solid oxide fuel cell as described above, a perovskite-type composite oxide powder in which an element contained in an A site of a perovskite-type composite oxide represented by a general formula ABO₃ is La and elements contained in a B site are Co and Ni.

### Related Art Document

### Patent Document

Patent Document 1: Japanese Unexamined Patent Application Publication No. 2008-305670

### Disclosure of the Invention

### Problems to be Solved by the Invention

Preferably, in a material used for the air electrode of a solid oxide fuel cell, the resistance thereof is minimized and the conductivity thereof is maximized. It is not easy to find the composition of such a material among countless combinations. If conductivity can be ensured without depending on the composition of the material, it can be expected that this contributes to the enhancement of the efficiency of power generation in a fuel cell.

An object of the present invention is to obtain high conductivity in the perovskite-type composite oxide powder of a specific composition.

### Means for Solving the Problem

In order to achieve the object described above, a perovskite-type composite oxide powder according to the present invention is a perovskite-type composite oxide powder represented by a general formula ABO_{3-δ} (where δ represents an amount of deficiency of oxygen and 0 ≤ δ < 1), an element contained in an A site is La (lanthanum), elements contained in a B site are Co (cobalt) and Ni (nickel) and a crystallite size determined by a Williamson-Hall method is equal to or greater than 20 nm and equal to or less than 100 nm.

Here, in a particle size distribution calculated by a Microtrac particle size distribution measurement, a ratio D_{50N} / D_{50V} of a cumulative 50% particle size D_{50N} calculated by a number distribution to a cumulative 50% particle size D_{50V} calculated by a volume distribution is preferably equal to or greater than 0.7.

In the particle size distribution calculated by the Microtrac particle size distribution measurement, a relationship in the volume distribution between a 10% cumulative particle size D_{10V}, a 50% cumulative particle size D_{50V} and a 90% cumulative particle size D_{90V} is preferably 1.0 ≤ (D_{90V} - D_{10V}) / D_{50V} ≤ 1.2.

According to the present invention, an air electrode for a solid oxide fuel cell is provided which includes any one of the perovskite-type composite oxide powders described above.

According to the present invention, a solid oxide fuel cell is provided which includes a fuel electrode, a solid electrolyte and an air electrode and uses, as the air electrode, the air electrode described above.

### Advantages of the Invention

According to the present invention, a more highly conductive perovskite-type composite oxide powder can be realized. By using the perovskite-type composite oxide powder as described above, it is possible to realize a highly conductive air electrode for a fuel cell and a fuel cell.

### Brief Description of Drawings

FIG. 1 is an XRD diagram in Example 1;
FIG. 2 is an enlarged XRD diagram (2θ = 30 to 50°) in Example 1;
FIG. 3 is XRD diagrams in Comparative Example 1 (solid line) and Comparative Example 2 (broken line);
FIG. 4 is enlarged XRD diagrams (2θ = 30 to 50°) in Comparative Example 1 (solid line) and Comparative Example 2 (broken line);
FIG. 5 is an SEM photograph in Example 1;
FIG. 6 is an SEM photograph in Example 2;
FIG. 7 is an SEM photograph in Comparative Example 1;
FIG. 8 is an SEM photograph in Comparative Example 2; and
FIG. 9 is a cross-sectional configuration view schematically showing an example of a solid oxide fuel cell.

### Description of Embodiments

A perovskite-type composite oxide powder according to the present invention is represented by a general formula ABO_{3-δ}, La is contained in an A site, and Co and Ni are contained in a B site. Hereinafter, a perovskite-type composite oxide having such a composition may also be referred to as the "LCN". δ represents the amount of deficiency of oxygen including 0, and the range of the value of δ is 0 ≤ δ < 1.

The amounts of Co and Ni contained in the B site can be arbitrarily adjusted. When they are represented as a general formula LaCo_{y}Ni_{1-y}O_{3-δ}, y in the formula preferably falls in a range of 0.1 ≤ y ≤ 0.7, and more preferably falls in a range of 0.3 ≤ y ≤ 0.65.

One of the major features of the LCN according to the present invention is that a crystallite size is equal to or greater than 20 nm and equal to or less than 100 nm. When the crystallite size is less than 20 nm, a large number of grain boundaries are formed in the particles of the powder, and thus the conductivity thereof may be lowered. On the other hand, when the crystallite size exceeds 100 nm, it is considered that since the crystallite size is close to the primary particle size of the particles of the powder, the conductivity thereof is lowered. The lower limit value of the crystallite size in the LCN according to the present invention is preferably 45 nm, and the upper limit value is preferably 80 nm.

The crystallite size in the LCN according to the present invention is obtained by using analysis software incorporated in a measuring device to separate, from the diffraction line peak of an X-ray diffraction pattern obtained by an X-ray diffraction measurement, the peak of a perovskite-type composite oxide which is represented by a general formula ABO_{3-δ} and in which La is contained in an A site and Co and Ni are contained in a B site and determining the peak of the resulting perovskite-type composite oxide in a range of 2θ = 10 to 90° by a Williamson-Hall method. A normal analysis on a crystallite size is calculated by a Scherrer method, and in the Scherrer method, it is assumed that diffraction line broadening is caused only by the crystallite size, with the result that in actual crystal, the lattice distortion of crystallites also exerts an influence. Hence, in the present invention, in order to separate the influence of the lattice distortion, the Williamson-Hall method is adopted to calculate the crystallite size.

In the LCN according to the present embodiment, when an X-ray diffraction measurement is performed with a Cu tubular ball, two or less peaks preferably appear around a range of 2θ = 30 to 35°. A ratio of a peak height caused by a component which is not incorporated in a perovskite-type structure to a peak height of the maximum diffraction line of the perovskite-type composite oxide (the peak height of the component which is not incorporated in the perovskite-type structure to the peak height of the maximum diffraction line of the perovskite-type composite oxide) is preferably equal to or less than 10%, further preferably equal to or less than 5% and more preferably equal to or less than 1%.

In the present specification, the LCN in which when an X-ray diffraction measurement is performed with a Cu tubular ball, two or less peaks appear around the range of 2θ = 30 to 35°, and the peak height caused by the component which is not incorporated in the perovskite-type structure is 10% or less of the peak height of the maximum diffraction line is determined to be the LCN of the perovskite-type composite oxide single phase. The LCN according to the present invention is preferably the perovskite-type composite oxide single phase.

When the LCN powder according to the present embodiment is used to form an air electrode for a fuel cell, the BET specific surface area of the LCN powder is preferably equal to or less than 10 m² / g. When the BET specific surface area of the LCN powder is equal to or less than 10 m² / g, an increase in the viscosity of an air electrode material obtained by forming the LCN powder into slurry or paint is suppressed, and thus the coating property of the slurry or paint is enhanced. The BET specific surface area of the LCN powder is more preferably equal to or less than 9.0 m² / g, and further preferably equal to or less than 8.0 m² / g. On the other hand, the BET specific surface area of the LCN powder is preferably equal to or greater than 2.5 m² / g. When the BET specific surface area of the LCN powder is equal to or greater than 2.5 m² / g, in a case where the LCN powder is used to form an air electrode for a fuel cell, an appropriate number of pores can be formed in the surface of the air electrode, and thus a contact area with a gas is increased, with the result that the efficiency of exchange when the fuel cell is formed can be enhanced.

The cumulative 50% particle size D_{50N} of the LCN powder according to the present embodiment calculated with a laser diffraction scattering particle size distribution measuring device by a number distribution is preferably equal to or greater than 0.35 µm and equal to or less than 2.1 µm. The cumulative 50% particle size D_{50V} of the LCN powder according to the present embodiment calculated with the laser diffraction scattering particle size distribution measuring device by a volume distribution is preferably equal to or greater than 0.5 µm and equal to or less than 3.0 µm.

In the LCN powder according to the present embodiment, the ratio D_{50N} / D_{50V} of D_{50N} to D_{50V} is preferably equal to or greater than 0.7. When D_{50N} and D_{50V} are significantly different from each other, this indicates that an extremely large number of particles are present in a unit volume. When D_{50N} is small, this indicates that a large number of particles whose particle size is small are present. When a large number of particles whose particle size is small are present, it is estimated that the sintering of particles in the air electrode easily progresses. Since ventilation by a gas is lowered when the sintering excessively progresses, it is not preferable that the particle size is excessively decreased. On the other hand, when D_{50V} is excessively large, this indicates that an excessively small number of particles whose particle size is small are present. It is not preferable that an excessively small number of particles whose particle size is small are present because the degree of necking when the air electrode is formed is decreased and thus the conductivity is lowered. With consideration given to a balance between a number average and a volume average, the maximum of D_{50N} / D_{50V} is less than 1.

In the LCN powder, in a 10% cumulative particle size D_{10V}, a 50% cumulative particle size D_{50V} and a 90% cumulative particle size D_{90V} in a volume distribution measured by the laser diffraction scattering particle size distribution measuring device, the value of (D_{90V} - D_{10V}) / D_{50V} is preferably equal to or less than 1.2. When the value of (D_{90V} - D_{10V}) / D_{50V} is equal to or less than 1.2, the volume distribution is sharp, the number of contact points at the time of burning is increased and thus the degree of necking in the LCN powder is increased at the time of burning when the air electrode for the fuel cell is formed, with the result that the conductivity can be enhanced. The value of (D_{90V} - D_{10V}) / D_{50V} is preferably equal to or greater than 1.0. When the value of (D_{90V} - D_{10V}) / D_{50V} is equal to or greater than 1.0, in a case where the LCN powder of the present embodiment is used to form the air electrode, it is possible to adjust the shape of voids formed between the particles to an appropriate shape, and the sintering of the particles occurs at the contact parts of the particles and thus it is possible to adjust the size of voids to an appropriate size.

### (Manufacturing method)

A method for manufacturing the LCN powder according to the present invention will be specifically described. Although as the method for manufacturing the LCN powder, there are a wet method in which a precursor and the like are formed in a solution and are subjected to heat treatment to form into a composite oxide and a dry method in which raw materials are weighed and are mixed and burned as they are to form into a composite oxide, in order to achieve the object of the present invention, it is preferable to manufacture the LCN powder by the wet method. This is because the present inventors have conducted thorough study to find that the wet method is used to be able to increase the crystallite size of the LCN to a size which cannot be normally achieved by the dry method. Although a method for manufacturing the LCN powder by the wet method is illustrated below, it is possible to make an adjustment as necessary without departing from the spirit of the method illustrated here.

As the method for manufacturing the LCN powder according to the present embodiment, the following method can be adopted. A raw material solution obtained by dissolving, in water or an acid, raw materials including lanthanum, cobalt and nickel elements is previously added to an alkaline solution such as ammonia water, a neutralization reaction is performed and thus slurry containing a neutralization product of a perovskite-type composite oxide is generated. As the raw materials, raw materials are preferable which are released as a gas without being left as impurities in the stage of burning.

The generated neutralization product preferably contains carbonic acid. In this way, when the neutralization product (in the present specification, also referred to as a "precursor") is separated and collected, a phenomenon is suppressed in which the neutralization product reacts with carbon dioxide in the air to locally form into a carbonate so as to enter a crystalline state. Consequently, the precipitation of an impurity phase caused when a perovskite type is formed in the subsequent steps is suppressed, and thus the neutralization product preferably contains carbonic acid. As the addition of carbonic acid into this system, the addition of a carbonate is preferable. Since the resulting neutralization product is amorphous nanoparticles in which the individual elements are uniformly mixed, the elements are easily diffused at the time of burning, with the result that an effect of facilitating change into a single phase and the growth of crystallite is obtained.

A temperature at which the neutralization product is formed is preferably equal to or less than 60°C, more preferably equal to or less than 50°C and further preferably equal to or less than 40°C. The temperature setting as described above is made, and thus materials such as carbonic acid and ammonia which are included in the solution and are easily formed into gases are dispersed as gases from the solution, with the result that the neutralization product can be suitably obtained. Since the neutralization product of the perovskite-type composite oxide obtained in the present embodiment is amorphous nanoparticles in which the individual elements are uniformly mixed, the elements are easily diffused at the time of burning, with the result that an effect of facilitating change into a single phase and the growth of crystallite is obtained.

The neutralization product obtained is separated from the slurry as necessary, and is washed and thereafter dried, and thus a precursor formed by drying the neutralization product is obtained. As a method of separating the neutralization product from the slurry, for example, any one of filtration separation, separation and collection using a filter press and a method of performing direct drying by spray drying, freeze drying or the like can be adopted. In each of the filtration separation and the filter press, a known method can be adopted. When the direct drying is performed, pH adjustment may be performed so that the precursor obtained is adjusted to have a desired size or the like. Preferably, in the pH adjustment, instead of using an adjustment agent containing an alkali metal such as sodium hydroxide or potassium hydroxide to prevent impurities such as an alkali metal and an alkaline earth metal from being left in a dry-agglomerated material, ammonia or the like which is unlikely to be left by being volatilized at the time of drying is used to make the adjustment. A drying temperature for drying the neutralization product is preferably equal to or greater than 150°C and equal to or less than 350°C, and more preferably equal to or greater than 200°C and equal to or less than 300°C. It is not preferable to dry the neutralization product at a temperature which extremely falls outside the dry temperature range described above because it is likely that a part of the neutralization product is changed into a perovskite type or the neutralization product is not sufficiently dried and thus moisture remains in the precursor powder.

Fine-pulverizing treatment can be performed by pulverizing the dried precursor powder. The pulverization may be performed after a burning step which will be described later. When in the drying step described above, drying is performed with a spray drier, it is likely that the pulverization does not need to be performed. Examples of a device used in the pulverization include a mortar, a sample mill, a Henschel mixer, a hammer mill, a jet mill, a pulverizer and an impeller mill, an impact mill and the like when dry pulverization is adopted. The number of revolutions when the impact mill is used is preferably equal to or greater than 9000 rpm and equal to or less than 16000 rpm. The number of revolutions of the impact mill and a pulverizing time are associated with a burning temperature and a burning time in the burning step, and it is preferable that as the burning temperature is higher and the burning time is longer, the number of revolutions of the impact mill and the burning time are increased.

### (Burning)

The precursor powder which is produced is burned in a burning furnace, and thus the LCN is obtained. As the burning furnace, a conventionally known burning furnace which has a heat source such as an electric or gas shuttle kiln, a roller hearth kiln or a rotary kiln can be used. In terms of increasing the crystallite size of the particles of the perovskite-type composite oxide powder, the burning is preferably performed at the burning temperature which is greater than 1000°C. The burning temperature is preferably equal to or less than 1500°C because it is easy to disintegrate the burned material after the burning.

A temperature increase rate at the time of burning is set equal to or less than 10°C/min, and an atmosphere at the time of burning may be the atmosphere or the burning may be performed in nitrogen containing 1 ppm or more and 20% or less of oxygen. The burning is gently performed, and thus the crystallite size can be adjusted. The burning furnace or a burning container is set to have an open system, and the temperature is increased while a gas component generated from the raw material salt of the component raw materials is being removed. The open system in the present invention refers to a reaction system in which the burning furnace or the burning container is not sealed and the gas of the atmosphere can flow in and out of the burning furnace or the burning container.

### (Pulverization)

Then, the granulated material (burned material) after the burning is pulverized. For the pulverization, either wet-pulverization or dry-pulverization may be performed, and both of them may be performed. For dry-pulverization, any one of the devices and the like described as examples for the pulverization of the precursor can be adopted. When wet-pulverization is adopted, a wet ball mill, a sand grinder, an attritor, a pearl mill, an ultrasonic homogenizer, a pressure homogenizer, an Ultimizer and the like can be mentioned. These are used to perform wet-pulverization or wet-crushing, and thus it is possible to form the perovskite-type composite oxide under the conditions described above. In particular, the pearl mill is preferably used. When the pearl mill is selected to perform wet-pulverization, though the pulverization can be performed with any one of existing wet-pulverizers such as a vertical flow tube-type bead mill, a horizontal flow tube-type bead mill and a strong pulverizing burst-type viscomill, the horizontal flow tube-type bead mill is preferably used. The horizontal flow tube-type bead mill is suitable because as compared with the vertical flow tube-type bead mill, the horizontal flow tube-type bead mill performs uniform pulverization while being stayed within a vessel to be able to perform uniform pulverization at the same flow rate. The horizontal flow tube-type bead mill is economically preferable because the horizontal flow tube-type bead mill has a high treatment flow rate as compared with the strong pulverizing burst-type viscomill. As a pulverizing medium, a ball manufactured of a hard raw material such as glass, ceramics, alumina or zirconia is preferably used. The particle size of the ball for obtaining the perovskite-type composite oxide having a desired particle size is preferably equal to or greater than about 0.1 mm and equal to or less than about 5.0 mm, and more preferably equal to or greater than 0.5 mm and equal to or less than 2.0 mm. As a dispersion medium used in wet-pulverization, water or an organic solvent such as ethanol which has a relatively low boiling point and is easily removed can be used. In terms of manufacturing costs, water is preferably used as the dispersion medium. Preferably, in the particle size distribution of the burned material (perovskite-type composite oxide powder) after the pulverization, the cumulative 50% particle size D_{50V} calculated with the laser diffraction scattering particle size distribution measuring device by a volume distribution is equal to or greater than 0.5 µm and equal to or less than 3.0 µm, and has a single peak distribution.

### (Solid oxide fuel cell, SOFC)

A solid oxide fuel cell will be described. FIG. 9 is a cross-sectional configuration view schematically showing an example of a solid oxide fuel cell. The solid oxide fuel cell has a structure in which a fuel electrode 1 in a thin plate shape or a sheet shape which serves as a support member, a solid electrolyte film 2 which is formed on the surface of the fuel electrode 1 and an air electrode 3 in a thin plate shape or a sheet shape which is formed on the surface of the solid electrolyte film 2 are stacked.

When a fuel gas (which is typically hydrogen (H₂) but may be hydrocarbon (methane (CH₄)) or the like) is supplied to the fuel electrode 1, a gas (air) containing oxygen (O₂) is passed to the air electrode 3 and a current is applied to the fuel cell, in the air electrode 3, the oxygen in the air forms into oxide ions. The oxide ions are supplied to the fuel electrode 1 from the air electrode 3 through the solid electrolyte 2. Then, in the fuel electrode 1, the oxide ions react with the fuel gas to generate water (H₂O), and thus electrons are emitted to generate electricity.

Although the SOFC depends on the configuration of a fuel cell which is applied and the manufacturing process thereof, the multilayer of the fuel electrode, the solid electrolyte film and the like is previously produced, on the multilayer, by a print method, evaporation or the like, a layer containing the air electrode material described above is formed and sintered and thus the air electrode is formed, with the result that the fuel cell is produced.

Although the film thickness of the air electrode is not particularly limited and is preferably determined as necessary according to the structure and the like of the cell, for example, the film thickness is preferably equal to or greater than 20 µm and equal to or less than 50 µm. As the material of the air electrode, only the LCN powder of the present embodiment may be used or a perovskite-type composite oxide powder having a different composition or a mixture obtained by mixing one or two or more types of perovskite-type composite oxide powders having different particle sizes and the LCN powder of the present embodiment may be used.

For the solid electrolyte layer, an electrolyte material used in the air electrode material described above can be used, and examples thereof include a rare earth element-doped ceria-based solid oxide electrolyte and a rare earth element-doped zirconia-based solid oxide electrolyte.

The film thickness of the solid electrolyte layer is set in a balanced manner such that the solid electrolyte layer is thick enough to maintain the denseness of the solid electrolyte layer and is thin enough to provide conductivity of oxygen ions or hydrogen ions suitable for a fuel cell. The film thickness is preferably equal to or greater than 0.1 µm and equal to or less than 50 µm, and more preferably equal to or greater than 1 µm and equal to or less than 20 µm.

The fuel electrode is preferably formed to have a porous structure and to be able to make contact with the supplied fuel gas, and a material which is conventionally used for a solid oxide fuel cell can be used. Examples thereof include metal oxides formed of one or more types selected from metals and/or metal elements such as nickel (Ni), copper (Cu), gold (Au), platinum (Pt), palladium (Pd), ruthenium (Ru) and other platinum group elements, cobalt (Co), lanthanum (La), strontium (Sr) and titanium (Ti). One or two or more types thereof may be mixed to be used.

In terms of durability, a thermal expansion coefficient and the like, the film thickness of the fuel electrode is preferably equal to or greater than 20 µm and equal to or less than 1 mm, and more preferably equal to or greater than 20 µm and equal to or less than 250 µm.

The structure of the SOFC can be formed in a flat shape, a polygonal shape, a cylindrical (tubular) shape, a flat cylindrical (flat tubular) shape obtained by vertically crushing the circumferential side of a cylinder or the like, which is conventionally known, and the shape and the size thereof are not particularly limited. As a flat SOFC, in addition to a fuel electrode support type (ASC: Anode-Supported Cell), for example, an electrolyte support type (ESC: Electrolyte-Supported Cell) in which an electrolyte is thick, an air electrode support type (CSC: Cathode-Supported Cell) in which an air electrode is thick and the like can be used. Moreover, a metal support cell (MSC: Metal-Supported Cell) in which a porous metal sheet is put under a fuel electrode can be provided.

### Examples

The present invention will be more specifically described below with reference to Examples.

### (Example 1)

535 g of a solution (La concentration: 15.17% by mass, NO₃⁻: 270 g/L) obtained by dissolving lanthanum oxide in nitric acid, 73 g of cobalt nitrate hexahydrate (Co(NO₃)₂·6H₂O) and 123 g of nickel nitrate hexahydrate (Ni(NO₃)₂·6H₂O) were dissolved in 269 g of ion-exchange water, and thus a mixed solution was produced.

2650 g of ion-exchange water and 216 g of ammonium carbonate were put into a reaction chamber, and were adjusted while being stirred such that the water temperature was 30°C. The mixed solution was gradually added into the ammonium carbonate solution, a neutralization reaction was performed, the neutralization product of a perovskite-type composite oxide was precipitated, the neutralization product was thereafter aged for 30 minutes and the reaction was completed.

### (2) Filtering-drying

The neutralization product obtained in this way was filtered and then washed with water, and a wet cake of the neutralization product obtained was molded into an elongated cylindrical pellet shape with a diameter of 5 mm. Immediately after the molding, the pellet-shaped molded body was heated and dried at 250°C for 2 hours while being ventilated by air, and thus a black precursor was obtained.

### (3) Buring

50 g of the precursor obtained was put into a round crucible (container having a diameter of 90 mm and a height of 75 mm), was set into an electric muffle furnace (KM-160 made by TOYO ENGINEERING WORKS, LTD.), was increased in temperature from room temperature to 800°C at a temperature increase rate of 3.1°C/min, was increased in temperature from 800°C to 1080°C at a temperature increase rate of 2.6°C/min, was held at 1080°C (burning temperature) for 2 hours to be burned and was then naturally cooled to room temperature.

On the burned material obtained, pulverization treatment was repeated twice, with a preparation volume of 20 g/B, at the rotation speed of 16000 rpm for 30 seconds with a sample mill pulverizer (model name: SK-M10, made by Kyoritsu Riko Co., Ltd.), and thus a perovskite-type composite oxide powder was obtained.

Then, 200 g of ZrO₂ beads having a diameter of 1.0 mm, 117 g of pure water and 50 g of the perovskite-type composite oxide powder were put into the pot of a four-tube sand grinder (TSG-4U type, capacity: 350 ml) made by IMEX Co., Ltd. While the pot was being cooled with cooling water of 20°C, pulverization treatment was performed at the rotation speed of 1500 rpm for 50 minutes, and thus slurry containing the pulverized material of the perovskite-type composite oxide powder as a solid content was obtained. Thereafter, the slurry obtained was dried at 125°C, and thus a perovskite-type composite oxide powder according to Example 1 was obtained.

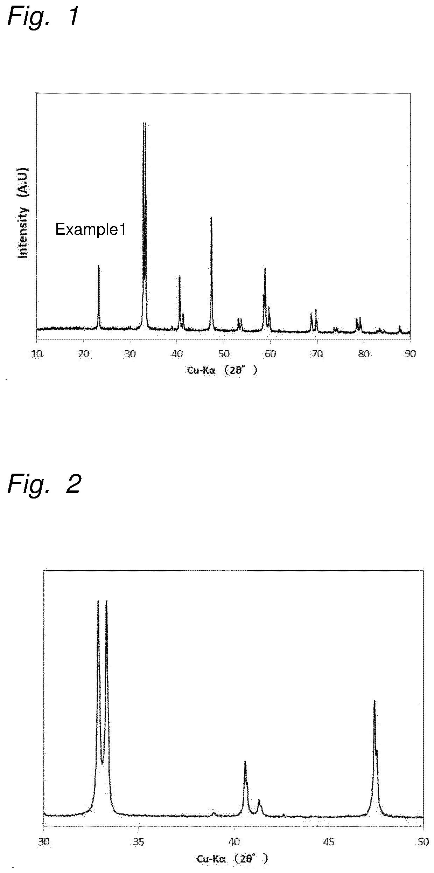

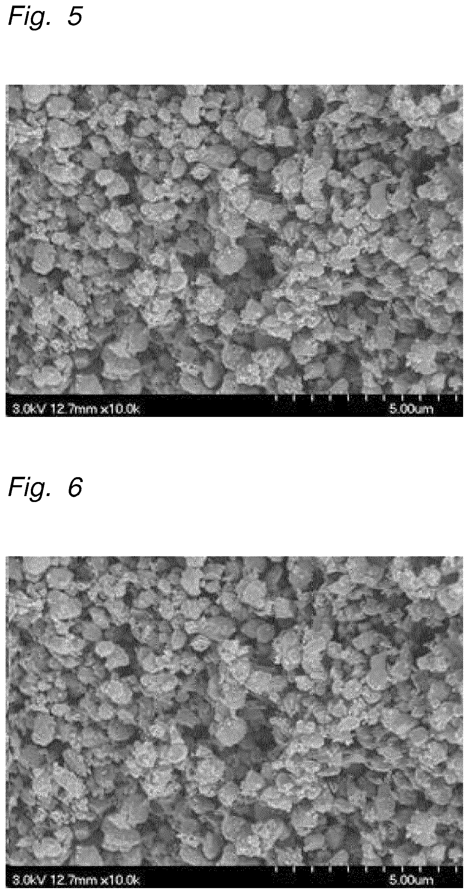

The physical properties and the like of the composite oxide powder obtained were measured by the following measurement methods. An XRD pattern is shown in FIG. 1. An XRD pattern obtained by extracting a part of 2θ = 30° to 35° is shown in FIG. 2, and an SEM photograph of the composite oxide powder is shown in FIG. 5.

It was confirmed from the XRD pattern that the element contained in the A site of the perovskite-type composite oxide powder in Example 1 was La and the elements contained in the B site thereof were Co and Ni. It was confirmed from the XRD pattern that two diffraction lines were present in 2θ = 30° to 35° and the substance obtained was a perovskite single phase.

An inductively coupled plasma (ICP) emission spectrometer (720ES made by Agilent Technologies, Inc.) was used to perform composition analysis on the perovskite-type composite oxide powder in Example 1, with the result that the perovskite-type composite oxide powder had a composition shown in table 2. On the composite oxide powders in other Example and Comparative Examples, composition analysis was performed in the same manner. The results thereof are shown in Table 2.

### (BET specific surface area)

The BET specific surface area of the perovskite-type composite oxide powder obtained was measured with a BET specific surface area measuring device (HM model-1210 made by Mountech Co., Ltd.) by a BET one-point method using nitrogen adsorption. In the measurement of the BET specific surface area, degassing conditions before the measurement were set to 105°C and 20 minutes. The results of the measurement in Examples 1 and 2 and Comparative Examples 1 and 2 are also shown in Table 1.

### (Volume reference, number reference particle size)

0.15 g of the perovskite-type composite oxide powder obtained was added to 60 mL of water containing 500 ppm of sodium hexametaphosphate, an ultrasonic homogenizer was used to perform dispersion for 30 seconds so as to obtain the perovskite-type composite oxide powder and slurry containing the perovskite-type composite oxide powder obtained was used to measure a cumulative 10% particle size (D_{10V}), a cumulative 50% particle size (D_{50V}) and a cumulative 90% particle size (D_{90V}) which were the volume references of the perovskite-type composite oxide powder and a cumulative 10% particle size (D_{10N}), a cumulative 50% particle size (D_{50N}) and a cumulative 90% particle size (D_{90N}) which were the number references with a Microtrac particle size distribution measuring device (MT3300EXII made by NIKKISO CO., LTD.) (with a particle refractive index set to 2.40, a solvent refractive index set to 1.333 and a calculation mode set to MT3000II). The results of the measurement in Examples 1 and 2 and Comparative Examples 1 and 2 are also shown in Table 1.

### (X- ray diffraction measurement)

An XRD measurement was performed on the perovskite-type composite oxide powder obtained with Ultima IV made by Rigaku Corporation. As measurement conditions, a Cu tubular ball was used, a tube voltage was set to 40 kV, a tube current was set to 40 mA, a divergence slit was set to 1/2°, a scattering slit was set to 8 mm, a light receiving slit was set to open, a step width was set to 0.02° and a measuring time was set to 4°/minute. Based on an X-ray diffraction pattern obtained, analysis software (integrated powder X-ray analysis software PDXL2 ICDS (Inorganic Crystal Structure Database) made by Rigaku Corporation) incorporated in the X-ray diffraction (XRD) device described above was used to identify the crystal phase of the perovskite-type composite oxide powder obtained and to analyze the compositions of impurity components.

A crystallite size was determined with the Williamson-Hall method from a peak in the range of 2θ = 10 to 90° obtained by separating the peak of the perovskite-type composite oxide powder.

### (Scanning electron microscope (SEM) observation)

The perovskite-type composite oxide powder obtained was observed with a field emission scanning electron microscope (S-4700 made by Hitachi High-Tech Corporation).

### (Conductivity measurement)

For the measurement of the conductivity of the composite oxide powder, 2 g of the powder to be measured was put into a unit having a radius of 10 mm, a powder resistance measurement system (MCP-PD51 made by Mitsubishi Chemical Analytech Co., Ltd.) was used to press the powder with a pressure of 16N (Newton) and the conductivity was measured with a resistivity meter (MCP-T610 made by Mitsubishi Chemical Analytech Co., Ltd.) by a 4-point probe method. The results of the measurement are also shown in Table 2.

### (Example 2)

The steps up to the filtering-drying step in Example 1 were performed in the same manner to obtain the precursor. 50 g of the precursor obtained was put into a rectangular pod, was set into a continuous burning furnace, was increased in temperature from room temperature to 900°C at a temperature increase rate of 3.1°C/min, was increased in temperature from 900°C to 1060°C at a temperature increase rate of 2.4°C/min, was held at 1060°C (burning temperature) for 2 hours to be burned and was then naturally cooled to room temperature. On the burned material obtained, as in Example 1, pulverization treatment was performed with a sample mill and a sand grinder, and thus a perovskite-type composite oxide powder according to Example 2 was obtained. It was confirmed that the XRD pattern of the particles was the same as shown in Example 1. Hence, the substance obtained is said to be a perovskite single phase. An SEM photograph of the oxide powder obtained is shown in FIG. 6.

### (Comparative Example 1)

### (Production of raw materials)

In order to obtain a composite oxide powder having a composition of La_{1.0}Co_{0.4}Ni_{0.6}O_{3-δ}, 27.1 g of La₂O₃, 5.4 g of Co₃O₄ and 7.5 g of NiO were weighed, and were mixed as raw materials with an automatic mortar for 30 minutes (hereinafter referred to as the "raw material mixture").

### (Buring)

50 g of the raw material mixture obtained was put into a round crucible (container having a diameter of 90 mm and a height of 75 mm), was set into the electric muffle furnace (KM-160 made by TOYO ENGINEERING WORKS, LTD.), was increased in temperature from room temperature to 800°C at a temperature increase rate of 3.1°C/min, was increased in temperature from 800°C to 1080°C at a temperature increase rate of 2.6°C/min, was held at 1080°C (burning temperature) for 2 hours to be burned and was then naturally cooled to room temperature.

### (Pulverization)

On the burned material obtained, pulverization treatment was repeated twice, with a preparation volume of 20 g/B, at the rotation speed of 16000 rpm for 30 seconds with the sample mill pulverizer (model name: SK-M10, made by Kyoritsu Riko Co., Ltd.), and thus a perovskite-type composite oxide powder according to Comparative Example 1 was obtained.

Then, 200 g of ZrO₂ beads having a diameter of 1.0 mm, 117 g of pure water and 50 g of the perovskite-type composite oxide powder were put into the pot of the four-tube sand grinder (TSG-4U type, capacity: 350 ml made by IMEX Co., Ltd.). While the pot was being cooled with cooling water of 20°C, pulverization treatment was performed at the rotation speed of 1500 rpm for 90 minutes, and thereafter, the pulverized material of the perovskite-type composite oxide powder was obtained as a solid content. The solid material obtained was dried at 125°C, and thus a perovskite-type composite oxide powder according to Comparative Example 1 was obtained. It was confirmed from the XRD pattern that the substance obtained was not a perovskite single phase and included another phase.

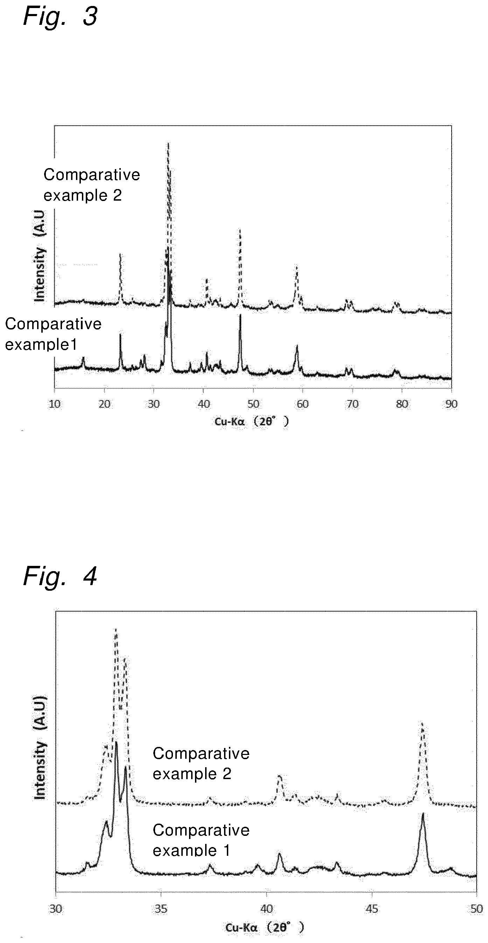

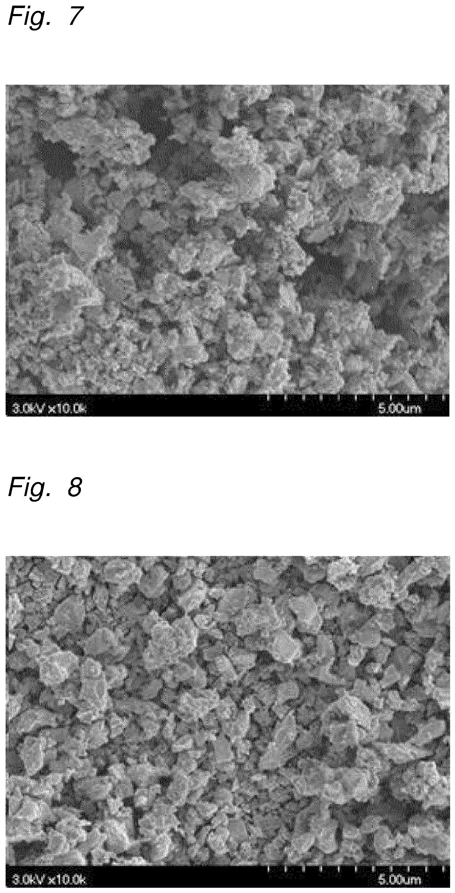

When the particle size distribution of the composite oxide powder obtained was measured in the same manner as in Example 1, a cumulative 50% particle size D_{50V} which was the volume reference of the composite oxide powder was 0.78 µm. An XRD pattern of the composite oxide powder obtained is shown in FIG. 3. An XRD pattern obtained by extracting a part of 2θ = 30 to 35° is shown in FIG. 4, and an SEM photograph of the composite oxide powder is shown in FIG. 7.

### (Comparative Example 2)

In order to obtain a composite oxide powder having a composition of La_{1.0}Co_{0.4}Ni_{0.6}O_{3-δ}, 27.1 g of La₂O₃, 5.4 g of Co₃O₄, 7.5 g of NiO, 99 g of pure water and 1.5 g of acetic acid were weighed, and while the pot was being cooled with cooling water of 20°C, pulverization treatment was performed at the rotation speed of 1500 rpm for 60 minutes, and thus raw material slurry was produced.

### (Drying)

Then, the slurry was dried at 125°C. On the dried material obtained, pulverization treatment was repeated twice, with a preparation volume of 50 g/B, at the rotation speed of 16000 rpm for 30 seconds with the sample mill pulverizer (model name: SK-M10, made by Kyoritsu Riko Co., Ltd.), and thus a dry-pulverized material was obtained.

The dry-pulverized material obtained was burned and pulverized in the same manner as in Comparative Example 1, and thus a perovskite-type composite oxide powder according to Comparative Example 2 was obtained. When the particle size distribution of the perovskite-type composite oxide powder obtained was measured as in Example 1, a cumulative 50% particle size D_{50V} which was the volume reference was 0.77 µm. An XRD pattern of the composite oxide powder obtained is shown in FIG. 3. An XRD pattern obtained by extracting a part of 2θ = 30 to 50° is shown in FIG. 4, and an SEM photograph of the composite oxide powder is shown in FIG. 8.

**[Table 1]**

| | BET (m²/g) | Microtrack | | | | | | | |
|---|---|---|---|---|---|---|---|---|---|
| | | Volume distribution | | | (D_{90V}-D_{10V})/D_{50V} | Number distribution | | | D_{50N} /D_{50V} |
| | | D_{10V}(µm) | D_{50V}(µm) | D_{90V}(µm) | | D_{10N}(µm) | D_{50N}(µm) | D_{90N}(µm) | |
| Example 1 | 4.21 | 0.48 | 0.73 | 1.30 | 1.12 | 0.37 | 0.53 | 0.79 | 0.72 |
| Example 2 | 4.06 | 0.53 | 0.81 | 1.41 | 1.10 | 0.40 | 0.58 | 0.87 | 0.71 |
| Comparative example 1 | 7.24 | 0.46 | 0.77 | 1.61 | 1.49 | 0.31 | 0.47 | 0.76 | 0.61 |
| Comparative example 2 | 4.09 | 0.49 | 0.78 | 1.44 | 1.23 | 0.36 | 0.53 | 0.82 | 0.68 |

**[Table 2]**

| | XRD | | | Conductivity (S/cm) | Composition | | |
|---|---|---|---|---|---|---|---|
| | Different phase | | Crystallite size (nm) | | | | |
| | La₄(Ni, Co)₃O₁₀ | NiO | | | La | Co | Ni |
| Example 1 | 0 | 0.63% | 56.4 | 22.83 | 1.00 | 0.40 | 0.60 |
| Example 2 | 0 | 0.78% | 47.5 | 10.96 | 1.00 | 0.40 | 0.61 |
| Comparative example 1 | 41 | 9.86% | 12.8 | 0.22 | 1.01 | 0.40 | 0.59 |
| Comparative example 2 | 32 | 8.04% | 15.5 | 3.02 | 1.01 | 0.40 | 0.59 |

In the perovskite-type composite oxide powder of Example 1 having a composition of La_{1.0}Co_{0.4}Ni_{0.6}O_{3-δ} and a crystallite size of 56.4 nm and the perovskite-type composite oxide powder of Example 2 having a composition of La_{1.0}Co_{0.4}Ni_{0.61}O_{3-δ} and a crystallite size of 4.75 nm, high conductivities of 22.83 (S/cm) and 10.96 (S/cm) were obtained.

By contrast, in the composite oxide powders of Comparative Examples 1 and 2 which had a composition of La_{1.01}Co_{0.4}Ni_{0.59}O_{3-δ} and in which the crystallite sizes were 12.8 nm and 15.5 nm that were smaller than a range specified in the present invention, the conductivities were 0.22 (S/cm) and 3.02 (S/cm) that were significantly lower than those of the perovskite-type composite oxide powders in Examples 1 and 2.

### Industrial Applicability

Since in the perovskite-type composite oxide powder according to the present invention, conductivity for an electrode is also ensured, it is expected that the properties thereof suitable for a solid oxide fuel cell and an air electrode for a solid oxide fuel cell are achieved. Since the perovskite-type composite oxide powders thereof have electronic conductivity, they can be utilized, for example, as an adsorbent, a catalyst carrier, a separation film, an oxygen electrode of a fuel cell or the like, an electrode of a capacitor or the like, a member of a functional filter, a gas sensor, a lithium storage device, a dye-sensitized solar cell and the like.

## Claims

1. A perovskite-type composite oxide powder represented by a general formula ABO_{3-δ} (where δ represents an amount of deficiency of oxygen and 0 ≤ δ < 1),
wherein an element contained in an A site is La,
elements contained in a B site are Co and Ni and
a crystallite size determined by a Williamson-Hall method is equal to or greater than 20 nm and equal to or less than 100 nm.

2. The perovskite-type composite oxide powder according to claim 1,
wherein in a particle size distribution calculated by a Microtrac particle size distribution measurement, a ratio D_{50N} / D_{50V} of a cumulative 50% particle size D_{50N} calculated by a number distribution to a cumulative 50% particle size D_{50V} calculated by a volume distribution is equal to or greater than 0.7.

3. The perovskite-type composite oxide powder according to claim 1 or 2,
wherein in the particle size distribution calculated by the Microtrac particle size distribution measurement, a relationship in the volume distribution between a 10% cumulative particle size D_{10V}, a 50% cumulative particle size D_{50V} and a 90% cumulative particle size D_{90V} is 1.0 ≤ (D_{90V} - D_{10V}) / D_{50V} ≤ 1.2.

4. An air electrode for a solid oxide fuel cell, the air electrode comprising:
the perovskite-type composite oxide powder according to any one of claims 1 to 3.

5. A solid oxide fuel cell comprising:
a fuel electrode:
a solid electrolyte; and
an air electrode,
wherein as the air electrode, the air electrode according to claim 4 is used.
